# EUROPEAN PATENT APPLICATION

(11) **EP 2 886 266 A1**
(43) Date of publication of application: **24.06.2015**
(21) Application number: 13382550.5
(22) Date of filing: 23.12.2013
(51) Int. Cl.: B26B 3/00, B29C 45/16, B25G 1/01

(54) **Improved structure for knife handles with visual identification means**

(71) Applicant: Arcos Hermanos, S.A., 02006 Albacete (ES)
(72) Inventor: Arcos Galiano, Roberto, 02006 ALBACETE (ES); Arcos Galiano, Pedro, 02006 ALBACETE (ES); Arcos Galiano, Ana, 02006 ALBACETE (ES)
(74) Representative: Isern-Jara, Nuria

(57) **Abstract**

An improved structure for knife handles with incorporated visual identification means, wherein the handle structure comprises a harder core (3) and a softer cover (4) that can extend to the entire core or cover it only partially, both the inner core and the outer cover being injected in a single machine by means of a co-injection process is described. The core is a thermoplastic polypropylene-type material and the cover is a thermoplastic elastomer. The surface finish of the outer cover may be plain or optionally include some type of engraving that improves its grip.

## Description

### Object of the Invention

The invention herein relates to an improved structure for knife handles with visual identification means, which provides novel characteristics and notable advantages over known means used for the same purposes in the current state of the art. More specifically, the invention proposes the development of a solidly integrated structure with the tang of a cutting blade obtained by a process of coinjecting two different materials to form an inner core of higher hardness and an outer cover made of a softer material with the option of a plain, grained surface finish or even with geometrical designs or other engraving to provide the handle with proper ergonomics and improve its grip. The handle can further bear identification means in one or more positions thereof, in one or more colours, for customisation of each knife based on user preferences or intended use by a quick visual selection of such identification means.

The application scope of the invention is included within the industrial sector specialising in the manufacture of cutting elements for industrial applications, such as in kitchens, slaughterhouses, butchers, canning factories, and others of an equivalent nature.

### Background and Summary of the Invention

Some knives that are equipped with visual identification means by means of certain coloured elements integrated into any position of the knife handle are already known in the state of the art. In particular, the Utility Model ES-1042097U describes an improved handle for knives that once represented a considerable breakthrough in the applications which it is designed for, as it provides a cutting means for both domestic and industrial applications, wherein said handle comprises a structurally rigid part or core coupled to the rear portion of the knife and integrated with said rear portion, and a cover of an elastomeric material applied to the inner core in a given longitudinal portion between two protruding end portions of the aforementioned core, and having a thickness such that it is flush with the respective thicknesses of both protruding end portions. Close to the rear end of the handle, provision has been made for the formation of two holes, transversely from facing opposite positions, reduced in size, provided for receiving and housing a respective stopper of a selected colour. In this way, the user or the professional can classify the knives based on the colour of their respective stoppers, to differentiate them based on the particular application which each of them is intended for, or even with a view to customising the knife.

Obviously, the knife described in the aforementioned registration record, was deemed a technical breakthrough at the time, given the high degree of classification, differentiation and specialisation in respect of its usefulness. Nonetheless, the Applicant has continued to conduct research and tests aimed at perfecting this kind of tool, allowing a set of improvements to be designed, which when applied to the structure of the handle make it possible to obtain a more efficient, more simply constructed handle structure, and increased possibilities both in terms of presentation and selection from the perspective of ergonomics and grip.

Therefore, in a preferred embodiment of a structure for knife handles with incorporated visual identification means, it has been possible to design a handle comprising an inner core of higher hardness and an outer cover made of a softer material, wherein the handle structure is obtained by a process of direct injection onto the tang of the knife using a single injection machine (coinjection process), wherein during a first operation the inner core is injected using a hard thermoplastic material and subsequently, in a second operation, a softer material is injected, for example a thermoplastic, elastomeric, non-hygroscopic material, to provide a soft outer cover on the aforementioned core.

The process of direct injection on the tang of the knife blade, that has been defined above, makes it possible to use a polypropylene material to form the harder inner core, and recycled or reused material can even be used, either in its entirety or in a high proportion, thereby saving costs and also eliminating potential waste. For its part, the material for the outer cover can extend and cover the entire inner core or expose the end portions of the hard inner core (and therefore be visible).

As a result, a knife handle structure manufactured according to the embodiment described above, has numerous advantages with respect to the handles of the current art, some of which are summarised below:
- Direct injection of handle structure using only one machine (co-injection);
- Harder inner core that can be wholly or partly manufactured from recovered or reused plastic material;
- Injection of elastomeric materials for external cover of the core with the option of having a plain surface finish or some kind of engraving which improves the handle grip and further helps to identify the knife;
- Choice of opting for a core that is completely hidden by the outer cover or exposed portions on both ends of the handle, and at any intermediate position including some kind of drawing or anagram;
- Providing identification stops in any position on the handle, on both sides in mutually opposite positions, either by a snap-on coupling in the respective holes of the handle, or by threading into said holes or adhered by any other means;
- Option to include coloured stoppers in the knife packaging, such that the user selects and assembles them on the handle.

### Brief Description of the Drawings

These and other characteristics and advantages of the invention will become more apparent from the detailed description that follows of a preferred embodiment thereof, given only by way of illustration and non-limiting in manner with reference to the accompanying drawings, in which:
Figure 1 is a side elevation schematic view of a handle structure for knives according to the invention herein, with a longitudinal portion of the inner core exposed by removing the corresponding portion of the outer cover;
Figure 2 is a schematic side elevation view of a knife equipped with the handle of the invention herein sectioned longitudinally along a section that is coplanar with the blade itself, and
Figure 3 is a schematic illustration of a knife handle structure finished in accordance with the representation in Figure 2.

### Description of the preferred embodiment

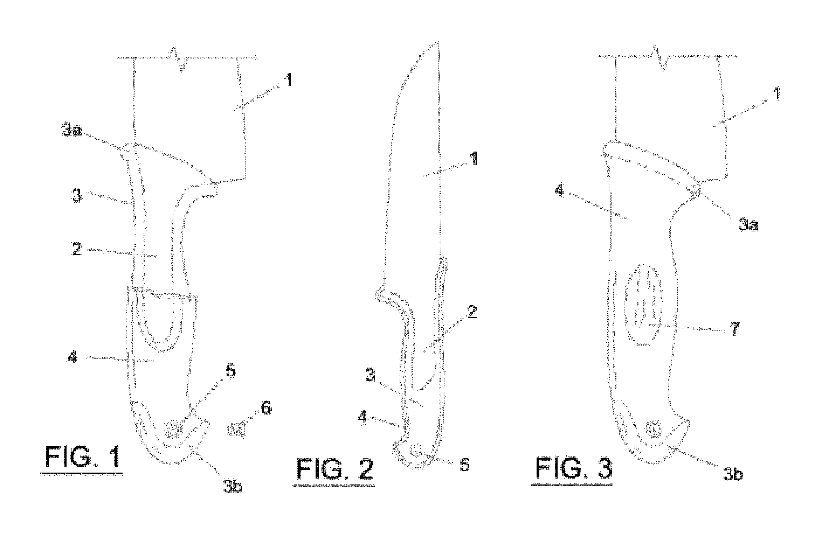

As mentioned above, the detailed description of the preferred embodiment of the object of the invention, will be made hereinafter with the aid of the accompanying drawings, through which the same numerical references are used to designate like or similar parts. Therefore, firstly in respect of Figure 1 of the drawings, a schematic representation of a portion of a knife is shown therein, in which the knife handle showing its structure according to the information provided in the present invention is visible. As shown in the representation of Figure 1, a knife blade 1 has a tang portion 2 (marked with broken lines in the drawing) as is customary for coupling to the handle structure, whose connection with the handle structure is obtained by direct injection of the materials constituting the structure of the handle on said tang by using a single machine and two injection operations. Firstly, during a first operation, the core 3 is injected with a hard thermoplastic material, which as stated above can be polypropylene, for example, with shapes and sizes that have been previously defined for that core; during a second operation, a softer material is injected, preferably an elastomeric thermoplastic material to form a softer coating 4 on the core 2, whose shapes and dimensions for providing an ergonomically better effect may be also selected beforehand.

In the example of the embodiment in Figure 1, the cover 4 is shown extended along the full length of the core 3, covering it completely. However, in other embodiments, the cover 4 may extend over the core 3 such that end portions of said core 3 are exposed, such as for example those which have been marked with references 3a, 3b defined in the drawing by broken lines.

Figure 2 is a longitudinal section view of the handle in Figure 1, in which the insertion of the tang 2 integral with the blade 1 in the inner core 3 during the injection of the latter, with the cover 4 hiding and completely surrounding the core 3 can be clearly seen. The cover is shown with an approximately uniform thickness, approximately following the profile of the core 2, but it is understood that in other embodiments the thickness may vary along its length according to each specific need.

The formation of transverse holes 5 on one or both sides of the handle in mutually facing positions, which are intended for receiving a stopper 6 (one in each hole), among any one of a predetermined number of different colours can be seen in the aforementioned Figures 1 and 2. It is understood that there are two holes 5 in the drawing, which appear in opposite positions near the free end of the handle, however, this should not be construed as limiting as the position of the (or each of the) hole(s) may be anywhere along the length of the handle, as long as it does not pose any obstacle for gripping and handling the knife by the user. It should further be made clear that fixing the stopper 6 in the corresponding hole 5 may be any of those known in the state of the art, including a snap-on coupling, threaded coupling or any other.

Lastly, Figure 3 shows a finished knife handle structure obtained according to the invention. This handle structure finished corresponding to the embodiment in Figures 1 and 2, shows the external characteristics of the handle, and for this purpose, an area 7 shown by an approximately oval area in a longitudinally intermediate position of the handle can be seen. This area is illustrative of the particular characteristic inherent to the outer cover 4, being able to show a plain surface finish or to incorporate an area 7 of any shape or contour, in any previously selected position along its length, with a different surface finish, in particular with an engraving of any kind to improve the grip of the handle for the user.

It is deemed unnecessary to provide more comprehensive content to the description herein for a person skilled in the art to understand its scope and advantages derived thereof, and to carry out the practical implementation of its subject matter.

Notwithstanding the foregoing, and as the description given relates only to an example of a preferred embodiment of the invention, it is understood that multiple variations of detail, also protected, may be included in its essential nature, which may affect the shape, size or manufacturing materials of the assembly or of its parts, without this implying any alteration of the invention as a whole, defined only by the claims provided hereinafter.

## Claims

1. Improved structure for knife handles with visual identification means, specifically ergonomically designed knife handles of the type that include visible coloured stoppers on the handle for customisation and/or selection of the knife based on application of the latter, the handle of which comprises an inner body or core (3) integrated with the tang (2) of the knife blade (1), for example a thermoplastic such as polypropylene, and an outer cover (4) applied on the surface of inner core (3) and built with a softer material, e.g. a thermoplastic elastomer, **characterised in that** both the inner core (3) and the outer cover (4) are bodies applied to the tang (2) of the knife by using a co-injection process, with a single injection machine.

2. Improved structure for knife handles according to claim 1, **characterised in that** the outer cover (4) made of softer material may optionally cover the entire surface of the inner core (3) or extend such that portions of the latter are left exposed.

3. Improved structure for knife handles according to claims 1 and 2, **characterised in that** said outer cover (4) optionally has a plain surface or incorporates some type of engraving (7) in any position longitudinally along its length, for the purposes of improving the gripping action of the knife.

4. Improved structure for knife handles according to claims 1 to 3, **characterised in that** the handle may incorporate one or more coloured stoppers for identifying the knife, in one or more preselected positions on the handle surface.
